# EUROPEAN PATENT APPLICATION

(11) **EP 2 583 953 A1**
(43) Date of publication of application: **24.04.2013**
(21) Application number: 11185947.6
(22) Date of filing: 20.10.2011
(51) Int. Cl.: C03C 25/36, C03C 25/40, C08J 5/08, C08K 5/5419

(54) **Sizing composition for glass fibres**

(71) Applicant: 3B-Fibreglass SPRL, 4651 Battice (BE)
(72) Inventor: Piret, Willy, 4651 Battice (BE); Masson, Nadia, 4651 Battice (BE)
(74) Representative: BiiP cvba

(57) **Abstract**

The present invention concerns a sizing composition for glass fibres comprising:
(a) A silane based coupling agent mixture,
(b) A film former,
(c) Additives,
Characterized in that, the silane based coupling agent mixture comprises (d) At least 15 wt.% of at least one dialkoxysilane, and
(e) At least 20 wt.% of at least one (meth)acryloxysilane,
wherein the wt.% are measured with respect to the total active solid weight of silane based coupling agent. The present invention also concerns a polymeric composite reinforced with such glass fibres.

## Description

### Technical Field

The present invention relates to the field of glass fibre reinforced composites and, in particular, of silane based sizings for glass fibres enhancing the mechanical properties of polymeric composites reinforced with glass fibres coated with such sizing. The sizing composition of the present invention is suitable for reinforcing various types of polymeric matrices, such as epoxies, unsaturated polyesters and vinylesters resins.

### Background for the invention

Polymeric materials have many attractive properties, but their mechanical properties are insufficient for many structural applications. Fibre reinforced composites, wherein approximately 6 to 25 µm diameter fibres having high stiffness and/or strength, typically carbon, glass or aramide fibres, are embedded in a polymeric matrix have substantially higher mechanical properties allowing to reach very advantageous mechanical properties to density ratios. The reinforcing fibres may be short, long or continuous. In the latter case, the continuous fibres can be oriented differently depending on the stress field a particular part is to be submitted to. The reinforcing fibres may be arranged in a fabric form, such as non-wovens, weaves of different patterns, braids, or knits, or they can be laid in a mould or filament wound following a predetermined pattern.

When a fibre reinforced composite is submitted to a stress field, the stress is transferred from the matrix to the fibres through the matrix-fibre interface. If the latter is strong, the whole load is transferred to the fibre and the mechanical properties are high. If, on the other hand, the interfacial bond between matrix and fibres is low, a crack may initiate at and propagate along the fibre-matrix interface resulting in an premature failure. It Is therefore very important to enhance the bond between matrix and fibres.

In order to allow handling of the fibres, typically in a loom, and to enhance interfacial adhesion with the matrix they are embedded in, the fibres are coated with a sizing which composition depends on the nature of the reinforcing fibre to be sized and on the matrix the fibres are to be used with. Glass fibres are usually sized with a silane based composition since Si-O-Si covalent bonds can be formed between, on the one hand, the glass fibre surface and silanols obtained by hydrolysing of the alkoxysilanes of the sizing and, on the other hand, between adjacent silanol groups, thus forming a crosslinked structure at the surface of the glass fibres. This crosslinked structure seems to enhance the fibre resistance to corrosion, typically to hydrolysis. Adhesion of the sizing with the matrix is enhanced by the organic function of the silane coupling agent and by a film former, which nature depends on the matrix used. Sizing compositions usually comprise other additive such as a lubricant, antistatic agents, and the like. Numerous sizing compositions for glass fibres have been proposed in the art, as e.g., in W02006007169, US2006204763, EP2053078, or WO2004110948 and are reviewed in E.P. Pluedemann, "Silane Coupling Agents", Plenium Press (1982*).*

In European patent application EP11171653 the present inventors proposed to reduce the amount of crosslinking at the surface of the glass fibres in order, inter alia, to prevent crosslinking of silanols between adjacent fibres. This was achieved by using a silane coupling agent having a high content ratio of dialkoxysilanes to trialkoxysilanes, namely at least 75 wt.% of the silane coupling agent present in the composition should be dialkoxylated. This led to an enhanced dispersion of the fibres and, contrary to what could be expected, to a good resistance to corrosion, because of the enhanced wetting of the fibres surface by the matrix.

Most glass fibre composites for high performance applications, such as wind mill blades, pressure containers and the like, use epoxy as a matrix, because of its higher mechanical and physical properties. Vinyl containing polymers, such as unsaturated polyester resins and vinylester resins are generally cheaper than epoxies, but the mechanical properties of glass fibre reinforced composites are substantially lower with the former matrices than with an epoxy matrices, regardless of whether the glass fibres are coated with the same sizing, or with a specific sizing to each type of matrix resin.

The present invention proposes sizing compositions for glass fibres which yield mechanical properties in polyester matrix composites approaching and, in some cases even equalling the ones in epoxy matrix composites. The sizings of the present invention also yield very good mechanical properties when used with epoxy resins, thus broadening the spectrum of matrices they can advantageously be used with. This and other advantages of the present invention are presented in the following.

### Summary of the invention

The present invention is defined in the appended independent claims. Preferred embodiments are defined in the dependent claims. In particular, the present invention concerns a sizing composition for glass fibres comprising:
(a) A silane based coupling agent mixture,
(b) A film former or fim formers mixture,
(c) Additives,
   Characterized in that, the silane based coupling agent mixture comprises
(d) At least 15 wt.% of at least one dialkoxysilane, and
(e) At least 20 wt.% of at least one (meth)acryloxysilane,
wherein the wt.% are measured with respect to the total active solid weight of silane based coupling agent.

In a preferred embodiment, the film former is selected from one or a mixture of several of a:
(i) Epoxy resin emulsion based on any of epoxy bisphenol A, epoxy bisphenol F, epoxy novolac, epoxy cresol novolac,
(ii) Epoxy ester resin emulsion,
(iii) Epoxy urethane resin emulsion,
(iv) Polyester emulsion,
(v) Vinylester ((meth)acrylated epoxies) emulsion,
(vi) Polyurethane polyester based dispersion.

The film former preferably comprises a bisphenol A based epoxy emulsion, admixed with one or more of the foregoing emulsions to enhance wetting by a specific matrix.

The silane based coupling agent mixture may comprise at least 20 wt.% dialkoxysilane, preferably at least 35 wt.%, more preferably at least 60 wt.%, and more preferably at least 95 wt.% dialkoxysilane, wherein the wt.% are measured with respect to the total active solid weight of silane based coupling agent. Said dialkoxysilane is preferably selected from one or more of a dialkoxy-epoxy-silane, a dialkoxy-vinyl-silane, a dialkoxy-(meth)acryloxysilane or a dialkoxy-aminosilane. In a particular embodiment, part or all of the (meth)acryloxysilane is a (meth)acryloxy-dialkoxysilane,

The (meth)acryloxysilane is preferably present in the silane based coupling agent mixture in an amount of at least 25 wt.%, preferably at least 45 wt.%, more preferably at least 75 wt.%, and more preferably at least 95 wt.%, wherein the wt.% of (meth)acryloxysilane are measured with respect to the total active solid weight of silane based coupling agent. The (meth)acryloxysilane Is preferably selected from:
(i) (meth)acryldialkoxysilanes, such as γ-(meth)acryloxypropylmethyldimethoxy-silane, γ-(meth)acryloxypropylmethyl-diethoxysilane, ((meth)acryloxymethyl)-methyldimethoxysilane, and/or
(ii) (meth)acryltrialkoxysilanes, such as γ-(meth)acryloxypropyltrimethoxysilane, γ-(meth)acryloxypropyltriethoxysilane,
(iii) methylmonoalkoxysilane (meth)acryloxypropyl-dimethylethoxysilane, (meth)acryloxypropyldimethylmethoxysilane.

Aminosilanes can be used in the present compositions, but its contents should be kept low. Aminosilane, if present at all, should not exceed 5 wt.% of the total active solid weight of silane based coupling agent. Preferably, the silane based coupling agent mixture comprises less than 3 wt.% aminosilane, more preferably less than 2 wt.%, most preferably less than 1 wt.%. In a most preferred embodiment, the silane based coupling agent mixture comprises no aminosilane at all. If present in the sizing, aminosilane can be selected from one or more of an aminodialkoxysilane or an aminotrialkoxysilane.

The sizing composition of the present invention may comprise one or more additives such as, a boron-containing compound, a non-ionic or cationic lubricant, an antistatic agent, and/or a weak organic acid to adjust the final size composition to a pH of 4.5 ± 0.5 and thus control the hydrolyzing kinetics of the silane alkoxy-groups.

The present invention also concerns a glass fibre coated with a sizing as defined above, and a glass fibre reinforced composite comprising such glass fibres. In a preferred embodiment, the glass fibre reinforced composite has a matrix selected from an unsaturated polyester resin, a vinylester resin, an polyurethane resin, or an unsaturated polyester urethane hybrid resin. With such matrices the dialkoxysilane present in the glass fibre sizing can be selected from an epoxysilane and/or a (meth)acryloxysilane; the film former may be selected from a polyester, a polyester based film former, a vinylester and/or an epoxy film former. In an alternative embodiment, the matrix can be an epoxy resin. A suitable dialkoxysilane could be an epoxysilane; the film former may be an epoxy film former.

A composite according to the present invention can be used for the manufacture of a windmill blade, a windmill generator housing, a pipe, a container, preferably a pressure container, a pultruded beam, a profile, a mechanically structural element, a leafspring, a ballistic protection element, filament wound parts, parts in the fields of boats & marine, automotive transportation, building, energy generation, sports; civil engineering.

Unless otherwise indicated, all wt.% values of a component are measured with respect to the active solids weight of said component.

### Brief description of the Figures

For a fuller understanding of the nature of the present invention, reference is made to the following detailed description taken in conjunction with the accompanying drawings in which:
**Figure 1****:** shows a graph of the short beam test (SBT) results measured on UD glass fibre reinforced composites of the prior art and according to the present invention;
**Figure 2****:** shows tensile-tensile (R 0.1)-fatigue test results carried out on 0° GF-reinforced composites using various matrices: number of cycles at rupture vs (a) max load, and (b) maximum strain.

### Detailed description of the invention

The present invention proposes a totally innovative form of silane based sizing for glass fibres for use as reinforcement in composite materials yielding superior properties with respect to the glass fibres presently available on the market. When about all silane based sizings are designed to react, on the one hand, with the surface of the glass fibres and, on the other hand, with each other so as to form a crosslinked net around the fibres, the present invention departs completely from this approach and limits -in some embodiments even practically eliminates- the crosslinking reactions between neighbouring silane chains. This is achieved by using dialkoxylated silanes in an amount of at least 15 wt.% of the total silane coupling agent instead of using mostly -and generally exclusively- trialkoxylated silanes as in the prior art.

The alkoxy groups of an alkoxysilane hydrolyze into hydroxyl groups when contacted with an aqueous medium to form a silanol. When applied into contact with the surface of a glass fibre, the hydroxyl groups of the silanol coupling agent condensate on the surface of the glass. Trialkoxysilanes will also react with neighbouring trialkoxysilanes to form a -Si-O-Si-network. Dialkoxysilanes as used in the present invention in an amount of at least 1 5 wt.% of the total silane coupling agent, cannot form an extensive crosslinking network with neighbouring dialkoxysilanes and will extend linearly from the surface of a glass fibre like as many hairs. The degree of interchains crosslinking between neighbouring silanols can be estimated by measurement of the solubility of the sizing. The weight of a sized glass fibre is measured before, m₀, and after, m₁, Soxhlet extraction with toluene. The solubility is expressed in % as (m₀ - m₁) / m₀. It is preferred in the frame of the present invention that the solubility in toluene be comprised between 30 and 98%, preferably between 50 and 95%.

The sizing of the present invention comprises at least 1 5 wt.% based on the total silane coupling agent of a dialkoxylated silane. In order to reduce even further the -SI-O-Si- crosslinking concentration of the sizing at the surface of the glass fibres, the silane coupling agent of the sizing of the present invention may comprise at least 20 wt.% of dialkoxylated silane coupling agent, the rest being trialkoxylated silanes. Preferably at least 35 wt.%, preferably at least 60 wt.%; more preferably at least 75 wt.%, most preferably at least 95 wt.% of the silane coupling agent should be dialkoxylated. Excellent properties are also obtained with a sizing composition comprising solely dialkoxysilane and no trialkoxysilane.

Preferred dialkoxysilanes are dimethoxysilanes, diethoxysilanes, and ethoxy-methoxysilanes. The dialkoxysilanes may be silane esters, vinyl silanes, epoxysilanes, isocyanate silanes. The dialkoxysilane can also comprise (meth)acryloxysilanes, provided that the total amount of di- and trialkoxylated (meth)acryloxysilane from at least 20 wt.% of the silane coupling agent, and can also comprise aminosilanes, provided that the total amount of di- and trialkoxylated aminosilane from not more than 5 wt.% of the silane coupling agent. Examples of dialkoxysilanes suitable for the present invention comprise:
(i) **Epoxy-silane**, such as γ-glycidoxypropylmethyldimethoxysilane, γ-glycidoxypropyl-methyldiethoxysilane,
(ii) **Vinyl-silane**, such as vinylmethyldimethoxysilane, vinylmethyldiethoxysilane, ,
(iii) **(Meth)acryloxy-silane**, such as γ-(meth)acryloxypropylmethyldimethoxysilane, γ-(meth)acryloxypropylmethyldiethoxysilane, ((meth)acryloxymethyl)methyldimethoxysilane,
(iv) **Amino-silane**, such as γ-aminopropylmethyldiethoxysilane, N-β-(Aminoethyl)-gamma-aminopropylmethyldimethoxysilane, N-β-(Aminoethyl)-γ-aminopropylmethyldimethoxysilane, N-β-(Aminoethyl)-γ-aminoisobutylmethyldimethoxy-silane, γ-aminopropylmethyldimethoxysilane, N-β-(Aminoethyl)-γ-aminopropylmethyldiethoxysilane,
(v) **Mercapto-silanes**, such as 3-mercaptopropyl methyldimethoxysilane.

Such dialkoxysilanes are readily available from the company SHIN ETSU under references KBE402, KBM-502, KBE-502, KBM-602; from the company MOMENTIVE under reference Silquest Wetlink 78 or Coatosil 2287, and A-21 71.

The documents WO2006007169, US2006204763, EP2053078, or WO2004110948 mention punctually dialkoxylated silanes out of rather extensive lists of triakoxylated silanes, but their use is never seriously contemplated, and if so, certainly not in amounts as high as at least 15 wt.% of the total amount of silanes.

Trialkoxysilanes can be present in an amount of not more than 85 wt.% of the total amount of silane coupling agent and form with the dialkoxysilanes the whole silane coupling agent of the sizings according to the present invention. Trialkoxysilanes can be selected from the trialkoxysilanes traditionally used in the prior art according to the specific application, provided that the sum of di- and trialkoxylated silanes forming the whole silane coupling agent comprises at least 20 wt.% of (meth)acryloxysilane and preferably not more than 5 wt.% of aminosilane. Beside the latter two silanes described more in detail below, the list of possible trialkoxylated silanes suitable for use with a dialkoxylated silane is too long to be exhaustive and is well known to the persons skilled in the art, and readily available from the same companies as listed in respect of the dialkoxylated silanes (cf. e.g., WO2006007169, US2006204763, EP2053078, or WO2004110948). The use of a limited amount of trialkoxylated silane in the composition allows to yield a limited amount of - SI-O-Si- crosslinking at the level of the interphase between the surface of the fibres and the coupling agent. In most cases, however, it is preferred to reduce the amount of trialkoxylated silanes to not more than 80 wt.%, preferably not more than 65 wt.%, more preferably, not more than 25 wt.%, most preferably not more than 5 wt.% with respect to the total weight of silane coupling agent present in the composition. In a particular embodiment of the present invention, the sizing composition comprises no trialkoxylated silane.

A sizing composition of the present invention must comprise a silane coupling agent including at least 20 wt.% of (meth)acryloxysilane, preferably at least 25 wt.%, more preferably at least 45 wt.%, most preferably at least 75 wt.%, and it may even include at least 95 wt.% (meth)acryloxysilane, wherein the wt.% are measured with respect to the total active solid weight of silane based coupling agent. The (meth)acryloxysilanes used in the present compositions may be di- or trialkoxylated. Examples of (meth)acryloxy di- and tri-alkoxysilanes include:
- **(meth)acryloxydialkoxysilanes**, such as γ-(meth)acryloxypropylmethyldimethoxy-silane, γ-(meth)acryloxypropylmethyl-diethoxysilane, ((meth)acryloxymethyl)-methyldimethoxysilane,
- **(meth)acryloxytrialkoxysilanes**, such as γ-(meth)acryloxypropyltrimethoxysilane, γ-(meth)acryloxypropyltriethoxysilane, γ-(meth)acryloxymethyltriethoxysilane,
- **(meth)acryloxymonoalkoxysilanes** (meth)acryloxypropyl-dimethylethoxysilane, (meth)acryloxypropyldimethylmethoxysilane.

The presence of (meth)acryloxysilane, regardless of whether di- or tri-alkoxylated, in the sizing composition is advantageous to enhance wettability of the fibres by resins such as unsaturated polyester resins, vinylester resins, polyurethane resins, and unsaturated polyester urethane hybrid resins. Good wetting of the fibres surface during impregnation by a flowing matrix is essential to yield good mechanical properties of a thus produced composite material.

Aminosilanes can be used as coupling agent in the sizings of the present invention, but in a limited amount only. Not more than 5 wt.% solids of the silane coupling agent shall be an aminosilane, preferably less than 3 wt.%, more preferably less than 2 wt.%, wherein the wt.% are measured with respect to the total active solid weight of silane based coupling agent. In a preferred embodiment, the silane based coupling agent mixture comprises no aminosilane at all. The amount of aminosilane should be kept low to limit the reactions of the amino groups with epoxy groups of other silanes or of the film former, which could lead to undesirable inter-fibres covalent bonds. Examples of suitable amino di- or tri-alkoxysilanes include:
- **aminodialkoxysilane**, such as γ-aminopropylmethyldiethoxysilane, N-β-(Aminoethyl)-γ-aminopropylmethyldimethoxysilane, N-β-(Aminoethyl)-β-aminopropyl-methyldimethoxysilane, N-β-(Aminoethyl)-γ-aminoisobutylmethyldimethoxy-silane, γ-aminopropylmethyldimethoxysilane, N-β-(Aminoethyl)-γ-aminopropyl-methyldiethoxysilane, and/or
- **aminotrialkoxysilane**, such as γ-aminopropyltriethoxysilane, γ-aminopropyltrimethoxysilane, N-β-(Aminoethyl)-γ-aminopropyltrimethoxysilane, N-β-(Aminoethyl)-γ-aminopropyltriethoxysilane, diethylenetriaminopropyltrimethoxysilane, bis-(γ-trimethoxysilylpropyl) amine, N-phenyl-γ-aminopropyltrimethoxysilane, γ-amino-3,3-dimethylbutyltrimethoxysilane, γ -aminobutyltriethoxysilane, polyazamide silane,.

The sizing composition of the present invention advantageously comprises at least one epoxysilane, in order to enhance the compatibility of the glass fibre with epoxy resins and to thus broaden substantially the range of matrices the sizing composition is particularly suitable for. If present in the composition, said epoxysilane is preferably selected from one or more of an;
(i) **epoxy-dialkoxysilane**, such as γ-glycidoxypropylmethyldimethoxysilane, γ-glycidoxypropyl-methyldiethoxysilane, or an
(ii) **epoxy-trialkoxysilane**, such as β-(3,4-epoxycyclohexy)ethyltrimethoxysilane, γ-glycidoxypropyltrimethoxysilane, γ-glycidoxypropyltriethoxysilane, γ-glycidoxypropyltriethoxysilane, β-(3,4-epoxycyclohexyl)ethyltriethoxysilane, β-(3,4-epoxycyclohexyl)ethyltrimethoxysilane, 5,6-epoxyhexyl-triethoxysilane.

The epoxysilane is preferably present in the silane coupling agent in an amount of at least 10 wt.%, preferably at least 20 wt.%, more preferably at least 67%, and can be present in an amount as high as 80 wt.%, provided at least 15 wt.% of the silanes are dialkoxylated, and at least 20 wt.% of the silanes are acryloxysilanes.

The total amount of silane coupling agent present in the composition is preferably comprised between 2 and 30 wt.% of the total active composition (i.e., excluding water and any hydrolysis volatile byproducts), more preferably between 4 and 20 wt.%, and most preferably between 8 and 18wt.%. Besides (meth)acryloxysilane and aminosilane, the silane coupling agent may comprise other silanes, such as vinyl-silane, mercapto-silane, and the like, both di- and tri-alkoxylated. The presence of an epoxysilane is preferred.

The film former interacts with both the silane coupling agent and the matrix upon impregnation of the fibres. The film former must therefore be compatible with the matrix to be used. A film former protects the glass fibre from damage during processing (e.g., weaving, knitting, braiding, etc.) and promotes compatibility of the fibres with the matrix. It is not necessary that the film former forms any -or at least not extensive- covalent bonds with the silane coupling agent. It is actually preferred that no or little covalent bonds be formed with the silane, so that it can dissolve in the matrix during impregnation of the fibre structure. Traces of film former were identified within the toluene extract of the sizing according to the present invention, suggesting that it remains soluble in the matrix. Preferred film formers comprise epoxy resins, saturated or unsaturated polyester resins, vinyl ester, or phenolic resins. Such film formers are sold as emulsions and are supplied, e.g., by companies like DSM under the tradename Neoxil or by Hexion-Momentive under the tradename Epi-Rez. The film former is preferably present in an amount comprised between 40 and 80 wt.%, more preferably between 50 and 70 wt.%, most preferably between 60 and 65 wt.% with respect to the total weight of the active composition (i.e., excluding the weight of the solvent used in the emulsion in which the film former is generally supplied). The film former can comprise a single component or be a mixture of film formers. Examples of suitable film formers include one or more of a:
- epoxy resin emulsion based on any of epoxy bisphenol A, epoxy bisphenol F, epoxy novolac, epoxy cresol novolac,
- epoxy ester resin emulsion,
- epoxy urethane resin emulsion,
- polyester emulsion,
- vinylester ((meth)acrylated epoxies) emulsion,
- polyurethane polyester based dispersion.

The film former preferably comprises a bisphenol A based epoxy emulsion, admixed with one or more of the foregoing emulsions to enhance wetting by a specific matrix. The combination of an epoxy with an ester film former broadens the number of types of matrices the sizing is compatible with, by enhancing wettability of the fibre surface by the flowing matrix and compatibility between the two.

The film former can also be modified by addition of typical additives able to increase the interface elongation and/or the fracture propagation energy which results, in particular, in an enhancement of the fatigue resistance of a composite reinforced with such fibres. Examples of modifiers for the film former include any elastomer soluble in the liquid film former before its emulsification, such as carboxyl terminated butadiene acrylonitrile copolymer (CTBN), carboxyl terminated butadiene homopolymer (CTB), epoxy terminated butadiene-acrylonitrile polymer (ETBN), vinyl terminated butadiene-acrylonitrile polymers (VTB), which are available from Emerald Performance Materials, or core shell rubber particles predispersed in epoxy resin as available from Kaneka as Kane Ace MX grades.

The film former may further comprise one or more surfactants such as for example, an octylphenoxypolyethoxyethanol (Triton X-100 from Union Carbide Corp.), an ethylene oxide/propylene oxide block copolymer (Pluronic P103 from BASF), an ethylene oxide/propylene oxide block copolymer (Pluronic F77 from BASF), an ethylene oxide/propylene oxide block copolymer (Pluronic 10R5 from BASF), a block copolymer of ethylene oxide and propylene oxide (Pluronic L101 from BASF), a polyoxyethylene-polyoxypropylene block copolymer (Pluronic P105 from BASF), or an ethylene oxide/propylene oxide copolymer (from BASF). Preferably, the film former resin emulsion contains two or more surfactants. The surfactants may be present in the film former resin emulsion in an amount from 7-25 wt.%, and most preferably in an amount of 10-20 wt.%.

The sizing composition of the present invention may comprise a number of additives including boron-containing compounds, non-ionic or cationic lubricant, antistatic agent, and weak acid.

Boron-containing compounds such as borates are considered as catalysts of various reactions. They are first believed to catalyze the hydrolysis of alkoxysilanes necessary to the formation of a covalent bond with the glass fibre surface by formation of silanols. Second, they are also believed to catalyse curing reactions of thermosetting matrices during manufacturing of a fibre reinforced composite part. Many types of boron salts can be used in the present invention. Examples of boron-containing compounds include boron oxide, sodium tetraborate, potassium metaborate, potassium tetraborate, ammonium biborate, ammonium tetrafluoroborate, butylammonium tetrafluoroborate, calcium tetrafluoroborate, lithium fluoroborate, potassium tetrafluoroborate, sodium tetrafluoroborate, tetrabutylammonium tetrafluoroborate, tetraethylammonium tetrafluoroborate, and zinc tetrafluoroborate. Ammonium tetrafluoroborate is most preferred. The ammonium tetrafluoroborate is preferably present in an amount comprised between 0.2 and 8 wt.% with respect to the total weight of the active composition, preferably 0.5 and 5 wt.% more preferably between 1 and 5 wt.%, most preferably between 1.2 and 2.5 wt.%.

A lubricant reduces interfilament abrasion and occurrence of fuzz. Its presence is essential for the handling of the fibres. The lubricant may be non-ionic, cationic or anionic. Cationic and, in particular, non-ionic lubricants are preferred. Suitable non-ionic lubricants are polyalkylene glycol fatty acids and esters thereof. For example, PEG200, PEG300, PEG400, PEG600 can be used and the esters comprise monooleate, dioleate, monolaurate, dilaurate, monostearate, and distearates. They are available from companies like Cognis, BASF, Oleon, and the like. Examples of cationic lubricants include polyethyleneimine polyamide salts. A preferred lubricant is PEG400 monooleate. The lubricant may be present in an amount comprised between 5 and 32 wt.% with respect to the total weight of the active composition, preferably between 10 and 25 wt.%, more preferably between 15 and 25 wt.%. The non-ionic lubricants preferably represent most of the lubricants present, with amounts comprised between 0 to 30 wt.% solids, more preferably from 10 to 25 wt.% solids with respect to the solids weight of the composition. The cationic lubricants, if any, are preferably present in an amount comprised between 0 and 2 wt.% solids, preferably between 0.8 and 1.2 wt.% solids.

As its name indicates, an antistatic agent prevents the build up of charges upon moving and rubbing of the insulating glass fibres during handling thereof. Examples of antistatic agents include quaternary ammonium, tetraethylammonium chloride, lithium chloride, polyethyleneimine condensate An antistatic agent is preferably present in the composition in an amount of 0 to 5 wt.% solids, preferably from 0.5 to 1.5 wt.% solids.

A sizing composition according to the present invention may further comprise small amounts of at least one weak organic acid to help the hydrolyzation of the silane(s) and to adjust the final size composition to a pH of 4.5 ± 0.5. The adjustement of the pH helps to reduce the speed of silane condensation and to allow a sufficient time to apply the size to the glass fibres. The sizing composition should preferably not comprise more than 2 wt.% of such weak organic acid. It is preferred that the organic acid is acetic acid. Since acetic acid is volatile, it is not accounted for in the composition solids wt.%.

The various components: silane coupling agent, film former, and additives are mixed in water to form an aqueous coupling agent composition. The solid content in water is generally not more than 10 wt.%, in particular, it may be comprised between 2 and 9 wt.%, preferably between 3 and 8 wt.% more preferably between 4 and 7 wt.%. The aqueous composition can be applied to the surface of glass fibres by means well known to the persons skilled in the art, generally by running the fibres drawn out of a bushing onto a coating roll continuously fed with the aqueous coupling agent. The fibres are then gathered into one or several bundles which sizes are only limited by the size of the bushing. A glass fibre bundle for applications in composite materials typically comprises between 800 and 8000 individual filaments. The glass fibre bundle is then wound on a spool and stored in a controlled atmosphere and temperature for drying and for condensation of the silane coupling agent onto the glass fibres surface. Alternatively, the fibre bundles can chopped into short fibre strands, which are further embedded in a thermoplastic matrix to form glass fibre reinforced pellets which can be processed by extrusion of injection moulding.

The continuous glass fibre bundles can then be further processed by weaving, braiding, knitting continuous bundles to form a fabric to be used as reinforcement of composite materials. Several fabric layers may be stacked and then impregnated with a polymeric matrix by technics such as resin transfer moulding (RTM), and the like. In another technique, dry glass fibre fabrics may be preimpregnated by e.g., calendering and individual plies of preimpregnated fibre fabrics (generally unidirectional) may be stacked to form a laminate which can be consolidated by compression moulding, vacuum bagging, autoclave moulding and the like. Alternatively, the glass fibre bundles can be impregnated directly with a polymeric matrix by techniques such as filament winding or pultrusion. Thermoplastic polymeric matrices may require intermediate steps for the impregnation in view of their generally high viscosity such as powder impregnation, fibre commingling, and the like. Some thermoplastic can be polymerized in situ like thermosets, such as in reaction injection moulding (RIM).

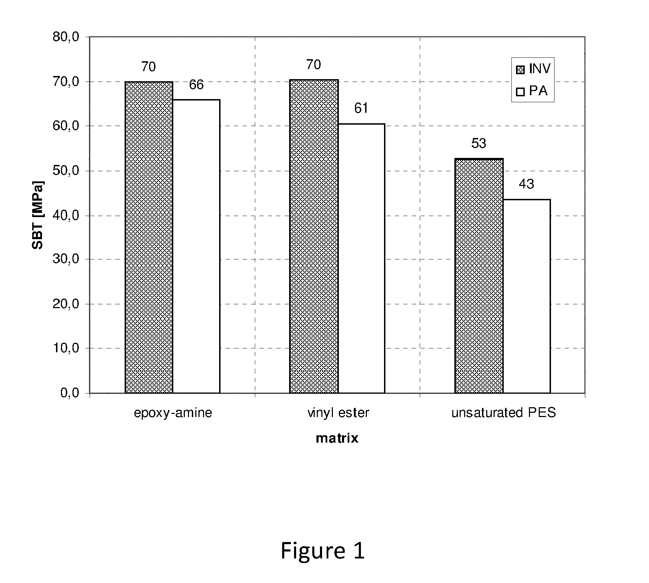

Any polymer can be used as matrix for a composite according to the present invention. In particular, the matrix can be a thermoset resin such as an epoxy, an unsaturated polyester, a vinylester, a polyurethane, and the like. Epoxy resins are particularly preferred. Alternatively, the matrix can be a thermoplastic polymer such as polypropylene (PP), polybutylene terephtalate (PBT), polyethylene terephtalate (PET), polyetheretherketone (PEEK), polyetherimide (PEI), linear polyurethane (PU), polycarbonate (PC), polystyrene and copolymers and terpolymers thereof. The sizing compositions of the present invention yield mechanical properties with epoxy resins which are comparable with the ones obtained with sizings specifically designed for epoxy. With unsaturated resins, the sizing of the present invention allows a substantial increase of the mechanical properties, in some cases comparable with the ones obtained with epoxy resins (cf. Figure 1).

Depending on the specific polymer used as matrix the composition of the sizing can be optimized. For instance, if the matrix is one of an unsaturated polyester resin, a vinylester resin, a polyurethane resin, or an unsaturated polyester urethane hybrid resin, the dialkoxysilane is preferably a (meth)acryloxysilane and/or an epoxysilane, and the film former is preferably a polyester based film former but can also be or comprise an epoxy film former. If the matrix is an epoxy resin, the dialkoxysilane is preferably an epoxysilane, and the film former is preferably an epoxy film former.

Fibre reinforced composite materials are particularly sensitive to three types of mechanicals strains:
(a) tensile strain applied normal to the direction of a fibre, which can be measured by a tensile test on unidirectional fibre reinforced samples applied at 90° with respect to the direction of the fibres as defined in ISO 527/1;
(b) shear strain parallel to a fibre, which can be characterized by a short beam test (SBT), which is a three point bending test applied on a particularly short sample and is defined in ISO14130; and
(c) Repetitive strain (fatigue), which can be characterized by a fatigue test as defined in ISO13003:2003, which is a repetitive three point bending or tensile test carried out at a constant strain or constant stress value.

Figure 1 shows the results of short beam tests (SBT) carried out on unidirectional glass fibre reinforced composites using various matrices: epoxy amine, vinyl ester, and unsaturated polyester, with glass fibres coated with 0.52 wt.% sizing (dry active solids) according to the present invention (cf. Ex.1 of Table 1 and grey columns in Figure 1) and the same glass fibres available on the market, coated with a commercial sizing specifically designed for high performance applications with epoxy resins as matrix (cf. white column in Figure 1). It can be seen that the SBT results measured on GF-epoxy amine composites are about 6% higher with the inventive sizing (grey column) compared with the prior art sizing (white column) which is close to the 5% error measured on the test. This result shows that the sizing of the present invention can be used with epoxy resins in replacement of the epoxy specific sizing available on the market without loss in shear strength of composites reinforced with glass fibres coated with such sizing.

When a vinyl ester resin is used as matrix, the increase in SBT performance is stunning, with a 1 5% increase bringing shear resistance of vinyl ester composites to the same level as the one of epoxy composites. With an unsaturated polyester as matrix, the increase in SBT performance is even more spectacular with an increase of 25% from a composite reinforced with prior art glass fibres compared with glass fibres coated with a sizing according to the present invention, as listed in Table 1.

**Table 1: compositions of sizings according to the present invention**

| **Function** | **Chemical compound** | **Ex.1** | **Ex.2** | **Ex.3** | **Ex.4** |
|---|---|---|---|---|---|
| | | **wt.%** | **wt.%** | **wt.%** | **wt.%** |
| Dialkoxysilane | 3-glycidoxypropylmethyldiethoxysilane | 12% | 11% | 3% | 16% |
| Acryloxysilane | γ-methacryloxypropyltrimethoxysilane | 6% | 11% | 16% | 5% |
| Film former | Bisphenol A epoxy | 60% | 57% | 60% | 58% |
| Borate | Ammonium tetrafluoroborate | 1% | 1% | 0% | 1% |
| lubricant | PEG400 monooleate | 20% | 19% | 20% | 19% |
| Lubricant/antistatic | Polyethyleneimine condensate | 1% | 1% | 1% | 1% |
| **Total** | | **100%** | **100%** | **100%** | **100%** |
| dialkoxysilane / silane mixture | | 67% | 50% | 16% | 76% |
| arcyloxysilane / silane mixture | | 33% | 50% | 84% | 24% |

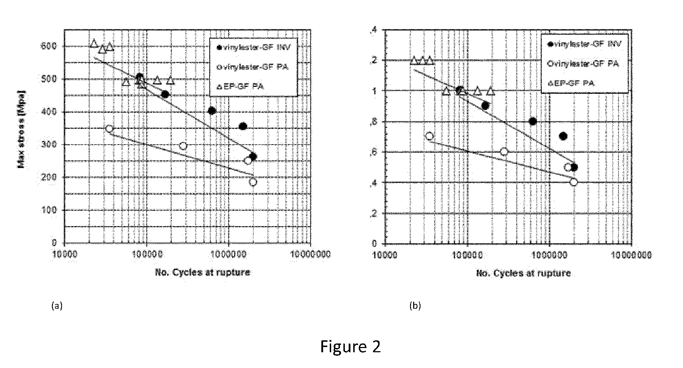

Figure 2 represents fatigue tests results measured on a vinylester matrix reinforced with glass fibres coated with a sizing according to the present invention (cf. Table 1, and black circles in Figure 2, referred to as "vinylester-GF INV") and with sized glass fibres available on the market, designed for high performance applications with epoxy resins (cf. white circles in Figure 2, referred to as "vinylester-GF PA"). The same tests were carried out an epoxy matrix composite reinforced with the same glass fibres as the vinylester of the prior art (cf. white triangles in Figure 2, referred to as "EP-GF PA"). Figure 2(a) shows the number of cycles at rupture as a function of the maximum tensile stress, whilst Figure 2(b) shows the same results as a function of maximum tensile strain. It can be seen that, as for the SBT results reported in Figure 1, the fatigue performance of a glass fibre reinforced vinylester composite according to the present invention are comparable with the ones of a glass fibre reinforced epoxy composite as presently used in high performance applications such as windmill blades (compare black circles (=INV) with the white triangles (=EP-GF PA)). The improvement of fatigue resistance of the vinylester composite according to the present invention (black circles) compared with the one of prior art vinylester composite is amazing, with one to two orders of magnitude increase in the number of cycles before rupture, especially visible at high levels of load (or strain). These results raise glass fibre reinforced vinylester composites to the selective group of materials eligible for high performance applications, with exposure to fatigue stresses, such as windmill blades, boat hulls, and the like.

Although the exact composition of the proprietary sizings used in the comparative tests is not known in detail, based on past publications it can safely be concluded that all the comparative sizings differ mostly from the inventive samples in that the coupling agent is based on a trialkoxysilane as is known from the literature and, contrary to the inventive samples, do not comprise substantial amounts of dialkoxysilane in combination with acryloxysilane (cf. Table 1). The bond between glass fibres and silane coupling agents should theoretically increase with the number of alkoxy-groups linked to a silicon atom of the silane, since three hydrolysed alkoxy groups have a higher probability of interacting and creating a bond with the glass surface than two groups only. A borate catalyst can promote the reactivity of the silane with the glass surface and compensates for the lower interaction probability of dialkoxylated silanes.

The comparative glass fibres are commercialized for use with epoxy, it is therefore assumed that they comprise mostly epoxy film formers and probably epoxysilane coupling agents. In order to render the mechanical results measured on the sizings of the examples according to the present invention more comparable with the ones measured on the comparative examples, it was decided to use in the former an epoxy film former and an epoxysilane as well. The presence of epoxies in the sizing compositions according to the present invention, also has the advantage of making them more compatible with epoxy resins, as well as with unsaturated resins.

As explained supra, the hydrolyzed sizing is applied to individual filaments which are immediately gathered into a bundle of several thousands of filaments before the sizing composition has fully reacted with the glass fibres. The condensation reaction happens during drying when the filaments are tightly packed into a bundle. When traditional sizing compositions based on trialkoxysilane coupling agents are used, the hydrolysed hydroxyl groups of the silanol react with the glass fibre, with the hydroxyl groups of neighbouring silanol chains attached to the same glass fibre, but also with the hydroxyl groups of neighbouring silanol chains attached to a different glass fibre, thus covalently clustering together the individual fibres within a bundle. When a bundle is aligned next to another to yield a unidirectional arrangement, the fibres are not distributed evenly across the cross section in a plane normal to the fibres direction, but are clustered into individual bundles, which are separated by voids. Upon impregnation of the fibres by a resin, the liquid resin follows the path of least resistance, i.e., of highest permeability, which is between bundles, and when the pressure builds up, it percolates between the fibres within the individual bundles. If two adjacent fibres are bond to each other by a -Si-O-Si- bond, the resin will not reach the area of these two glass fibres in the region of the covalent bond. If many interfibre bonds are present within a bundle, it may reduce substantially the fibre area wetted by the resin.

By including varying amounts of dialkoxysilane in sizing compositions, the level of crosslinking of the sizing can be modulated. It has been concluded that significant effects could be observed when at least 15 wt.% of the silane coupling agent was a dialkoxysilane. In case an epoxysilane is used, the amount of aminosilane must be taken into consideration too. It has been observed that the amount of aminosilane should not exceed 5 wt.% of the total solids weight of the silane coupling agent.

Paradoxically, preliminary results suggest that the resistance to corrosion of composites according to the present invention is not adversely affected by the use of dialkoxysilane coupling agent replacing part or all of the trialkoxysilane coupling agent. This is believed to be due to the better wetting of the fibre surface by the resin which shields the fibres from the corrosive agents, like the crosslinked -Si-O-Si- network formed at the surface of the prior art fibres is meant to shield the fibre surface from said corrosive agents.

These extraordinary results are attributed to a more thorough wetting of the fibres surface during matrix impregnation which is attributed to the high solubility of the sizing allowing the fibres to separate from one another within a bundle during impregnation, such that the permeability within the bundle is substantially increased as well as to the enhanced compatibility between the sizing and various matrices which are able to form strong bonds upon crosslinking of the latter. The sizing of the present invention allows to expand the range of polymers suitable for high performance applications beyond the mere single choice of epoxy resins. One of the recurrent weaknesses of fibre reinforced composite materials is a limited resistance to fatigue. The sizing of the present invention substantially enhances resistance to fatigue of glass fibre reinforced composites, making them particularly suitable for applications exposed to cyclic exposures to stress and strain. For example, wind turbines blades which can span up to 60 m in length and over are highly solicited in fatigue by their own rotation and the wind speed variations. Similarly all structural components exposed to water current, such as pipes, wave and tidal energy converters, boat hulls and the like must have a high resistance to fatigue. In the field of transportation, leafsprings are of course a paradigm of cyclic solicitation. These applications only constitute a non exhaustive list of possible applications for composites according to the present invention. Many other applications are possible, such as containers, preferably pressure containers, pultruded beams, profiles, any mechanically structural element, a ballistic protection element, filament wound parts, parts in the fields of, automotive and airborne transportation, building, energy generation, sports; civil engineering. The skilled person will promptly recognize where the superior mechanical properties of the present composites can best be taken advantage of.

## Claims

1. Sizing composition for glass fibres comprising:
(a) A silane based coupling agent mixture,
(b) A film former,
(c) Additives,
**Characterized in that**, the silane based coupling agent mixture comprises
(d) At least 15 wt.% of at least one dialkoxysilane, and
(e) At least 20 wt.% of at least one (meth)acryloxysilane,
wherein the wt.% are measured with respect to the total active solids weight of silane based coupling agent.

2. Sizing composition according to claim 1, wherein the film former is present in an amount comprised between 40 and 80 wt.%, more preferably between 50 and 70 wt.%, most preferably between 60 and 65 wt.% with respect to the total weight of the active composition and wherein the film former is preferably selected from one or from a mixture of several of a:
(i) Epoxy resin emulsion based on any of epoxy bisphenol A, epoxy bisphenol F, epoxy novolac, epoxy cresol novolac,
(ii) Epoxy ester resin emulsion,
(iii) Epoxy urethane resin emulsion,
(iv) Polyester emulsion,
(v) Vinylester ((meth)acrylated epoxies) emulsion,
(vi) Polyurethane polyester based dispersion,
and wherein the film former preferably comprises a bisphenol A based epoxy emulsion, admixed with one or more of the foregoing emulsions to enhance wetting by a specific matrix.

3. Sizing composition according to any of the preceding claims, wherein the silane based coupling agent mixture comprises at least 20 wt.% dialkoxysilane, preferably at least 35 wt.%, more preferably at least 60 wt.%, and more preferably, at least 95 wt.% dialkoxysilane, wherein the wt.% are measured with respect to the total active solid weight of silane based coupling agent, and wherein said dialkoxysilane is preferably selected from one or more of a dialkoxy-:
(i) **Epoxy-silane**, such as γ-glycidoxypropylmethyldimethoxysilane, γ-glycidoxypropyl-methyldiethoxysilane,
(ii) **Vinyl-silane**, such as vinylmethyldimethoxysilane, vinylmethyldiethoxysilane,
(iii) (Meth)acryloxy-silane, such as γ-(meth)acryloxypropylmethyldimethoxysilane, γ-(meth)acryloxypropylmethyldiethoxysilane, ((meth)acryloxymethyl)methyldimethoxysilane,
(iv) **Amino-silane**, such as γ-aminopropylmethyldiethoxysilane", N-β-(Aminoethyl)-γ-aminopropyl-methyldimethoxysilane, N-γ-(Aminoethyl)-γ-aminoisobutylmethyldimethoxy-silane, γ-aminopropylmethyldimethoxysilane, N-β-(Aminoethyl)-γ-aminopropyl-methyldiethoxysilane,
(v) **Mercapto-silane**, such as 3-mercaptopropyl methyldimethoxysilane.

4. Sizing composition according to any of the preceding claims, wherein part or all of the (meth)acryloxysilane is a dialkoxysilane.

5. Sizing composition according to any of the preceding claims, wherein the silane based coupling agent mixture comprises at least 25 wt.% (meth)acryloxysilane, preferably at least 45 wt.%, more preferably at least 75 wt.%, and more preferably, at least 95 wt.% (meth)acryloxysilane, wherein the wt.% are measured with respect to the total active solid weight of silane based coupling agent, and wherein the (meth)acryloxysilane Is preferably selected from:
(i) **(meth)acryldialkoxysilanes**, such as γ-(meth)acryloxypropylmethyldimethoxy-silane, γ-(meth)acryloxypropylmethyl-diethoxysilane, ((meth)acryloxymethyl)-methyldimethoxysilane, and/or
(ii) **(meth)acryltrialkoxysilanes**, such as γ-(meth)acryloxypropyltrimethoxysilane, γ-(meth)acryloxypropyltriethoxysilane,
(iii) **(meth)acrylmonoalkoxysilanes**, such as (meth)acryloxypropyl-dimethylethoxysilane, (meth)acryloxypropyldimethylmethoxysilane.

6. Sizing composition according to any of the preceding claims, wherein the silane coupling agent comprises not more than 5 wt.% aminosilane, preferably less than 3 wt.% aminosilane, more preferably less than 2 wt.%, wherein the wt.% are measured with respect to the total active solid weight of silane based coupling agent, and most preferably, the silane based coupling agent mixture comprises no aminosilane at all, and wherein, if present in the composition, said aminosilane is preferably selected from one or more of an;
(i) **aminodialkoxysilane**, such as γ-aminopropylmethyldiethoxysilane, N-β-(Aminoethyl)-gamma-aminopropylmethyldimethoxysilane, N-β-(Aminoethyl)-γ-aminopropyl-methyldimethoxysilane, N-β-(Aminoethyl)-γ-aminoisobutylmethyldimethoxy-silane, γ-aminopropylmethyldimethoxysilane, N-β-(Aminoethyl)-γ-aminopropyl-methyldiethoxysilane, and/or
(ii) **aminotrialkoxysilane**, such as γ-aminopropyltriethoxysilane, γ-aminopropyltrimethoxysilane, N-β-(Aminoethyl)-γ-aminopropyltrimethoxysilane, N-β-(Aminoethyl)-γ-aminopropyltriethoxysilane, diethylenetriaminopropyltrimethoxysilane, Bis-(γ-trimethoxysilylpropyl) amine, N-phenyl-γ-aminopropyltrimethoxysilane, γ-amino-3,3-dimethylbutyltrimethoxysilane, γ-aminobutyltriethoxysilane, polyazamide silane, ,

7. Sizing composition according to any of the preceding claims, wherein the silane coupling agent comprises at least an epoxysilane, preferably in an amount of at least 20 wt.% of the total active solid weight of silane based coupling agent, and wherein, if present in the composition, said epoxysilane is preferably selected from one or more of an;
(i) **epoxy-dialkoxysilane**, such as γ-glycidoxypropylmethyldimethoxysilane, γ-glycidoxypropyl-methyldiethoxysilane, or an
(ii) **epoxy-trialkoxysilane**, such as β-(3,4-epoxycyclohexy)ethyltrimethoxysilane, γ-glycidoxypropyltrimethoxysilane, γ-glycidoxypropyltriethoxysilane, γ-glycidoxypropyltriethoxysilane, β-(3,4-epoxycyclohexyl)ethyltriethoxysilane, β-(3,4-epoxycyclohexyl)ethyltrimethoxysilane, 5,6-epoxyhexyl-triethoxysilane.

8. Sizing composition according to any of the preceding claims, wherein the additives comprise one or more of:
(i) a **boron-containing compound** selected from the group consisting of boric acid, boron oxide, sodium tetraborate, potassium metaborate, potassium tetraborate, ammonium biborate, ammonium tetrafluoroborate, butylammonium tetrafluoroborate, calcium tetrafluoroborate, lithium fluoroborate, potassium tetrafluoroborate, sodium tetrafluoroborate, tetrabutylammonium tetrafluoroborate, tetraethylammonium tetrafluoroborate and zinc tetrafluoroborate;
(ii) **A non-ionic lubricant**, preferably a fatty acid monoester of polyethylene glycol, such as PEG 200 Monolaurate, PEG 600 Monooleate, PEG 600 Monostearate, PEG 400 Monostearate PEG 400 Monooleate, PEG 600 Monolaurate, the non-ionic lubricant being preferably present in an amount of 0 to 30 wt.% solids, more preferably from 10 to 25 wt.% solids,
(iii) **A cationic lubricant**, such as a polyethyleneimine polyamide salt, and is preferably present in the size composition in an amount from 0 to 2 wt.% solids, preferably from 0.8-1.2 wt.% solids,
(iv) **An antistatic agent**, such as a quaternary ammonium, a tetraethylammonium chloride, or lithium chloride, and is preferably present in an amount of 0 to 5 wt.% solids, preferably from 0.5 to 1.5 wt.% solids.
(v) **a weak organic acid** to adjust the final size composition to a pH of 4.5 ± 0.5, such as acetic acid, and is preferably present in the size composition in an amount from 0 to 2 wt.%.

9. Glass fibre coated with a sizing composition according to any of the preceding claims.

10. Glass fibre reinforced composite **characterized in that** it comprises glass fibres according to the preceding claim.

11. Glass fibre reinforced composite according to the preceding claim, wherein the matrix is one of a unsaturated polyester resin, a vinylester resin, a polyurethane resin, or an unsaturated polyester urethane hybrid resin, and wherein the
(i) The dialkoxysilane is selected from a (meth)acryloxysilane and/or an epoxysilane,
(ii)The film former is selected from a polyester based film former, a vinyl ester, and/or epoxy film former.

12. Glass fibre reinforced composite according to claim 10, wherein the matrix is an epoxy resin and wherein the
(i) The dialkoxysilane is selected from an epoxysilane,
(ii)The film former is selected from an epoxy film former.

13. Glass fibre reinforced composite according to any of claims 10 to 12, which is part of a windmill, such as a blade or a generator housing element, a pipe, a container, preferably a pressure container, a pultruded beam, a profile, a mechanically structural element, a leafspring, a ballistic protection element, filament wound parts, parts in the fields of boats & marine, automotive and airborne transportation, building, energy generation, sports; civil engineering.
